# EUROPÄISCHE PATENTSCHRIFT

(11) **EP 1 871 159 B1**
(45) Veröffentlichungstag und Bekanntmachung des Hinweises auf die Patenterteilung: **05.11.2014**
(21) Anmeldenummer: 05800974.7
(22) Anmeldetag: 15.11.2005
(51) Int. Cl.: A01C 1/02, A01G 31/02

(54) **EINRICHTUNG ZUR ERZEUGUNG VON KEIMLINGEN AUS SAMEN**
DEVICE FOR PRODUCTION OF SPROUTS FROM SEEDS
DISPOSITIF POUR PRODUIRE DES GERMES A PARTIR DE GRAINES

(30) Priorität: 20.04.2005 EP 05405305
(43) Veröffentlichungstag der Anmeldung: 02.01.2008
(73) Patentinhaber: Vitaseed AG, 3600 Thun (CH)
(72) Erfinder: SANTOLI, Constantino, CH-1642 Sorens (CH); PITTET, Bertrand, CH-1741 Cottens (CH)
(74) Vertreter: BOVARD AG
(86) Internationale Anmeldenummer: PCT/CH2005/000674
(87) Internationale Veröffentlichungsnummer: WO 2006/111030

(56) Entgegenhaltungen:
- FR-A- 1 099 052
- GB-A- 1 382 262
- GB-A- 2 163 634
- US-A- 4 642 939
- US-A1- 2004 237 396

## Beschreibung

Die vorliegende Erfindung bezieht sich auf eine Einrichtung zur Erzeugung von Keimlingen aus Samen, umfassend eine in einem Gehäuse gelagerte, im wesentlichen horizontal angeordnete, um die Trommelachse rotierbare Trommel mit perforierter Wandung, in welche die Samen einfüllbar sind, welche Samen mit Wasser benetzbar sind und welche Trommel in einstellbaren Zeitintervallen während einer bestimmten Zeit rotiert.

Keimlinge bzw. gekeimte Samen sind bekannterweise reich an Vitaminen, Mineralstoffen, Spurenelementen, Aminosäuren und biologisch aktiven Substanzen. Sie sind reich an Enzymen, die die chemischen Reaktionen im Körper steuern. Es ist bekannt, dass der Mangel an Enzymen in der Nahrung eine Ursache für viele Zivilisations- und Alterskrankheiten sein kann. Bei gekeimten Samen sind die Enzyme darin enthalten, mit dem Kauen werden die Enzyme der Keimlinge freigesetzt, jeder Keimling ist mit den entsprechenden Enzymen für seine Verdauung ausgestattet.

Zum Ziehen von Keimlingen aus Samen sind für den Hausgebrauch in vielfältiger Weise verschiedene Geräte bekannt. So sind beispielsweise Geräte bekannt, die mehrere Stockwerke mit Schalen aufweisen und in jedem Stockwerk einige Gramm Samen eingefüllt werden, wobei zweimal täglich im obersten Stockwerk Wasser zugegeben wird, das dann durch die unteren Stockwerke abläuft und somit die Samen benetzt werden. In wenigen Tagen erhält man dadurch die gewünschten Keimlinge. Die Qualität dieser Keimlinge hängt im wesentlichen von der regelmässigen und gleichmässigen Bewässerung und Entwässerung der Schalen und somit der Samen ab.

Indem das Frischwasser in die oberste Schale zugeführt wird und über die unteren Stockwerke wieder abfliesst, besteht die Gefahr, dass die Samen bzw. Keimlinge in den unteren Stockwerken ungleichmässig und mit Wasser abnehmender Qualität versorgt werden. Zudem können die Abflussöffnungen in den einzelnen Schalen durch die aufquellenden Samen verstopft werden, somit bleiben die Keimlinge im Wasser liegen, was zur Entwicklung von Schimmelpilzen führen kann. Während des Reifeprozesses werden die Keimlinge nicht gelockert oder bewegt. Dadurch können in den Schalen Zonen mit hoher Dichte entstehen, die nur ungenügend belüftet werden können, wodurch zusammen mit dem Restwasser die Keimlinge zu gären beginnen, sie werden zudem schleimig.

Mit derartig übereinander angeordneten Schalen besteht somit der Nachteil, dass nicht eine optimale Qualität des Endproduktes erreicht werden kann.

Es sind auch Einrichtungen für die industrielle Produktion von Keimlingen bekannt. Hierzu sind grosse rotierende Trommeln vorgesehen, in welche die Samen eingefüllt werden, das Wasser wird periodisch über Düsen als Nebel in die Trommeln eingespritzt. Durch die Rotation der Keimtrommeln während der Bewässerung und Entwässerung werden die Keimlinge periodisch umgeschichtet und gelockert. Dadurch wird eine homogene Benetzung und Entwässerung des Trommelinhalts sichergestellt und die partielle Gärung und Schimmelpilzbildung wird verhindert (S. z.B. US 2004/0237396 A1).

Diese Einrichtungen sind aber wegen der Grösse und der Art der Benetzung im Haushalt nicht anwendbar.

Die Aufgabe der vorliegenden Erfindung besteht somit darin, eine Einrichtung zur Erzeugung von Keimlingen aus Samen zu schaffen, welche im Haushalt verwendbar ist und mit welchen eine optimale Erzeugung von Keimlingen ohne die vorgängig beschriebenen Nachteile erreicht werden kann.

Erfindungsgemäss erfolgt die Lösung dieser Aufgabe dadurch, dass die Trommel an einem Träger angebracht ist, welcher Träger entlang am Gehäuse angebrachten Führungsmitteln durch Antriebsmittel absenkbar und anhebbar ist, und dass ein Wasserbad derart im Gehäuse angeordnet ist, dass die Trommel in der unteren Lage teilweise in das Wasserbad eintaucht und im angehobenen Zustand vollständig aus dem Wasserbad herausgehoben ist.

Mit dieser Einrichtung wird ein optimales Benetzen der Samen bzw. der Keimlinge erreicht, das Entwässern ist durch das Anheben aus dem Wasserbad sichergestellt, die Samen und Keimlinge werden durch die Rotation der Trommel in optimaler Weise periodisch umgeschichtet und gelockert, wodurch Keimlinge mit konstanter und hoher Qualität erhalten werden können.

In vorteilhafter Weise ist der Träger aus zwei parallel verlaufenden Tragarmen gebildet, zwischen welchen die Trommel auf Rollen rotierbar abgestützt ist, welche Tragarme an einer Halteplatte befestigt sind, die im wesentlichen senkrecht zu den Tragarmen ausgerichtet ist. Dadurch wird eine optimale Lagerung der rotierbaren Trommel erhalten.

Eine weitere vorteilhafte Ausgestaltung der Erfindung besteht darin, dass am Gehäuse eine Rückwand angebracht ist, welche im wesentlichen senkrecht zur Trommelachse ausgerichtet ist und entlang welcher die Halteplatte mit den Tragarmen zum Anheben und Absenken der Trommel, geführt durch die Führungsmittel, verschiebbar ist. Dadurch ergibt sich eine einfache Konstruktion, um die Trommel geführt anhebbar und absenkbar lagern zu können.

In vorteilhafter Weise ist zum Anheben und Absenken der Trommel und zum rotierenden Antreiben der Trommel ein Antrieb mit entsprechenden Getrieben angebracht. Mit diesem einen Antrieb kann sowohl die Trommel in Rotation versetzt werden als auch die Anheb- und Absenkbewegung der Trommel ausgeführt werden, wodurch sich ein einfacher Aufbau der Einrichtung ergibt.

Eine weitere vorteilhafte Ausgestaltung der Erfindung besteht darin, dass der Antrieb einen Elektromotor umfasst, der an der Halteplatte befestigt ist und einen Achszapfen rotierend antreibt, welcher Achszapfen in der Halteplatte gelagert ist und welcher mit der Trommel verbindbar ist. Durch diesen einfachen Aufbau lässt sich auch die Trommel in einfacher Weise aus der Einrichtung wegnehmen und wieder einsetzen.

In vorteilhafter Weise ist am Achszapfen drehfest ein weiteres Zahnrad befestigt, welches mit einer Zahnplatte, die aussenseitig mit einer umlaufenden Verzahnung versehen ist, kämmt, welche in der Rückwand im wesentlichen horizontal verschiebbar gehalten ist. Durch die Verwendung dieser Zahnplatte lässt sich der Bewegungsablauf Rotation-Anheben-Absenken der Trommel durch einen Antrieb in sehr einfacher Weise realisieren.

In vorteilhafter Weise ist die seitliche Verschiebung der Zahnplatte beidseits mit Abstützelementen begrenzt. Dadurch wird vermieden, dass durch einen zu grossen Verschiebeweg die Zahnplatte mit dem weiteren Zahnrad ausser Eingriff kommt.

In vorteilhafter Weise ist in der Rückwand eine längsschlitzförmige Ausnehmung angebracht, durch welche der Achszapfen hindurchragt. Dadurch wird in einfacher Weise Platz geschaffen für die Anordnung des die Trommel antreibenden Achszapfens.

Eine weitere vorteilhafte Ausgestaltung der Erfindung besteht darin, dass ein Benetzungszyklus einem vollständigen Umlauf des weiteren Zahnrads um die Zahnplatte entspricht und durch einen Endschalter begrenzt ist, welcher durch einen an der Zahnplatte angebrachten Vorsprung betätigbar ist. Dadurch ergibt sich für den zeitlichen Ablauf der Bewegung und den Stillstand dieser Einrichtung eine sehr einfache Steuerung.

In vorteilhafter Weise ist der Benetzungsvorgang durch eine Steuereinrichtung steuerbar, welcher mit einem Zeitglied ausgestattet ist, mittels welchem das Zeitintervall von einem Benetzungsvorgang bis zum nächsten einstellbar ist. Dadurch lässt sich die Betriebsweise dieser Einrichtung für die Erzeugung von Keimlingen aus Samen optimieren.

Eine Ausführungsform der Erfindung wird nachfolgend anhand der beiliegenden Zeichnung beispielhaft näher erläutert.

Es zeigt:
Fig. 1 in räumlicher Darstellung die erfindungsgemässe Einrichtung mit der sich im angehobenen Zustand befindenden Trommel;
Fig. 2 in räumlicher Darstellung die erfindungsgemässe Einrichtung mit der Trommel im abgesenkten Zustand;
Fig. 3 in räumlicher Darstellung eine Ansicht der in der Mitte teilbaren Trommel;
Fig. 4 in räumlicher Darstellung die erfindungsgemässe Einrichtung mit abgenommenem Gehäuse und herausgenommener Trommel, wobei sich der Träger in der angehobenen Position befindet;
Fig. 5 in räumlicher Darstellung eine Ansicht von hinten auf die Rückwand mit darin eingesetzter verschiebbarer Zahnplatte und auf den Achszapfen aufgeschobener Trommel;
Fig. 6 in räumlicher Darstellung eine Ansicht auf den Träger mit darauf angeordnetem Elektromotor und Endschalter;
Fig. 7 eine räumliche Darstellung der erfindungsgemässen Einrichtung mit auf die Rückwand aufgesetztem Träger und aufgesetzter Trommel;
Fig. 8 in schematischer Darstellung die auf der Rückwand verschiebbar angeordnete Zahnstange, im Eingriff mit dem weiteren Zahnrad in der Ausgangsposition;
Fig. 9 in schematischer Darstellung die nach links in der Rückwand verschobene Zahnplatte;
Fig. 10 in schematischer Darstellung die Stellung des weiteren Zahnrads und der Zahnplatte, wenn sich der Träger mit der Trommel im abgesenkten Zustand befinden; und
Fig. 11 in schematischer Darstellung die Lage der Zahnplatte und des weiteren Zahnrads, wenn der Träger mit der aufgesetzten Trommel angehoben werden.

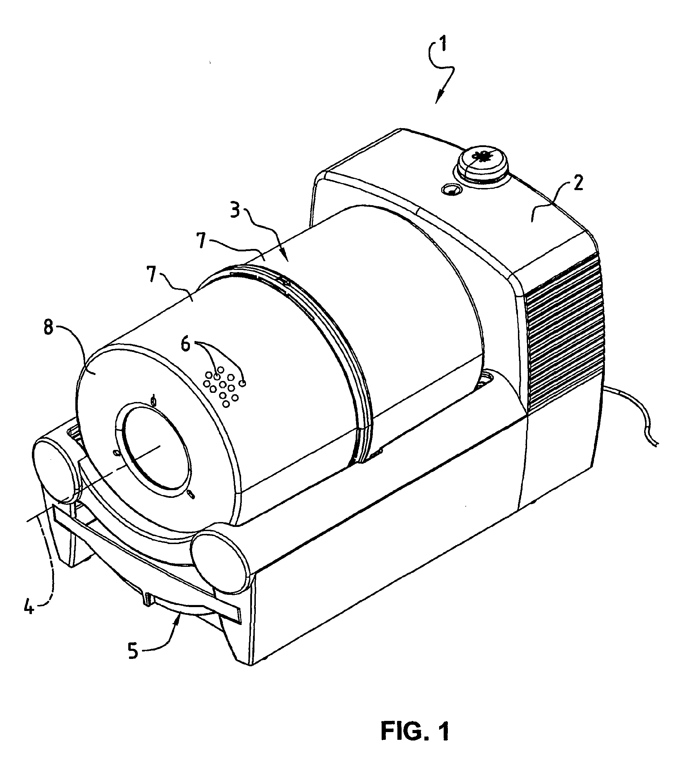

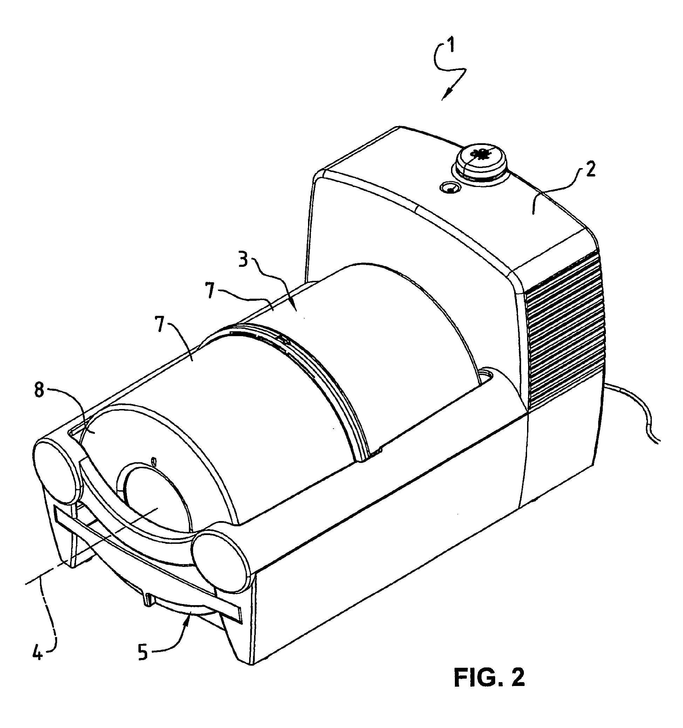

In Fig. 1 ist die erfindungsgemässe Einrichtung 1 zur Erzeugung von Keimlingen aus Samen ersichtlich. Diese Einrichtung 1 ist mit einem Gehäuse 2 versehen, in welchen die erforderliche Antriebsvorrichtung und die Lagerung für eine Trommel 3 untergebracht sind, wie später noch im Detail beschrieben wird. Die Trommel 3 ist so gelagert, dass sie um die Trommelachse 4 rotierbar ist. Wie später noch gesehen wird, ist die Trommel 3 im Gehäuse 2 absenkbar, wie dies aus Fig. 2 ersichtlich ist, so dass die Trommel in das im unteren Bereich des Gehäuses 2 angeordnete Wasserbad 5 eintauchen kann.

Wie aus der Fig. 1 ersichtlich ist, ist die Trommel 3 aus mit Bohrungen 6 versehenen perforierten Blechen 7 gebildet, die Perforationen überdecken praktisch die gesamte Trommel 3. Stirnseitig ist die Trommel 3 mit einer ringförmigen Abdeckung 8 versehen, die ebenfalls perforiert sein kann.

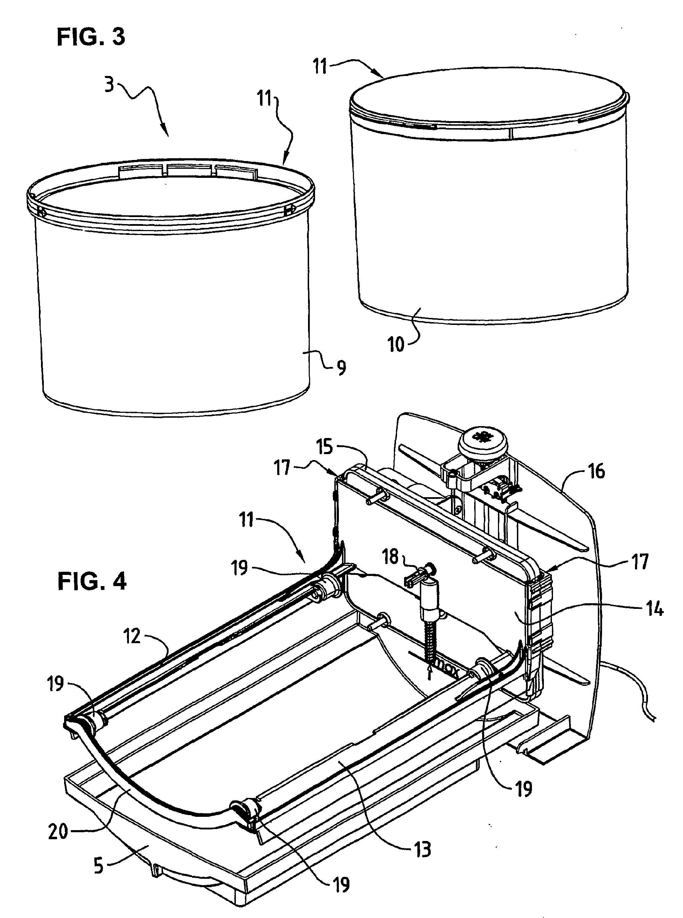

Fig. 2 zeigt die Trommel 3 im abgesenkten Zustand, die Trommel 3 taucht somit in das Wasserbad 5 ein. In diese Trommel 3 können die Samen eingefüllt werden, die zur Keimung gebracht werden soll. Um das Einfüllen und Entnehmen dieser Samen in die bzw. aus der Trommel 3 zu erleichtern, ist die Trommel 3 aus zwei Hälften 9 und 10 gebildet, die in bekannter Weise über die entsprechenden Mittel 11 lösbar miteinander verbindbar sind. In der in Fig. 3 gezeigten Darstellung sind die Perforationen der beiden Hälften 9 und 10 der Trommel 3 nicht eingezeichnet. Selbstverständlich sind aber beide Hälften perforiert.

In Fig. 4 ist der Träger 11 dargestellt, welcher zwei parallele Tragarme 12 und 13 umfasst, die an einer Halteplatte 14 befestigt sind. Diese Halteplatte 14 steht senkrecht zu den beiden Tragarmen 12 und 13. Die Halteplatte 14, die doppelwandig ausgebildet ist, umschliesst die Rückwand 15, die fest mit dem Hinterteil 16 und dem daran befestigten Wasserbad 5 verbunden ist. Der Hinterteil 16 bildet einen Bestandteil des Gehäuses 2, welches in Fig. 4 abgenommen ist, wie auch die Trommel 3 (Fig. 1 und Fig. 2). Die Halteplatte 14 ist entlang der Rückwand 15 verschiebbar gelagert, wozu stirnseitig Führungsmittel 17 angeordnet sind, welche in bekannter Weise aus nicht dargestellten Gleitflächen bestehen. Aus der Halteplatte 14 gegen die Trommelseite hin vorstehend ist ein Achszapfen 18, welcher, wie später noch im Detail beschrieben wird, rotierend antreibbar ist, und auf welchen die Trommel 3 aufsetzbar ist, wodurch die Trommel 3 über diesen Achszapfen 18 rotierend antreibbar ist.

An den beiden Tragarmen 12 und 13 sind Rollen 19 angebracht, die jeweils in den Randbereichen dieser beiden Tragarme 12 und 13 angeordnet sind, so dass der jeweilige Randbereich der Trommel 3 auf diesen Rollen 19 zur Auflage kommt. Die beiden Tragarme 12 und 13 sind aus Stabilitätsgründen an den der Halteplatte 14 abgewandtem Bereich über einen Steg 20 miteinander verbunden.

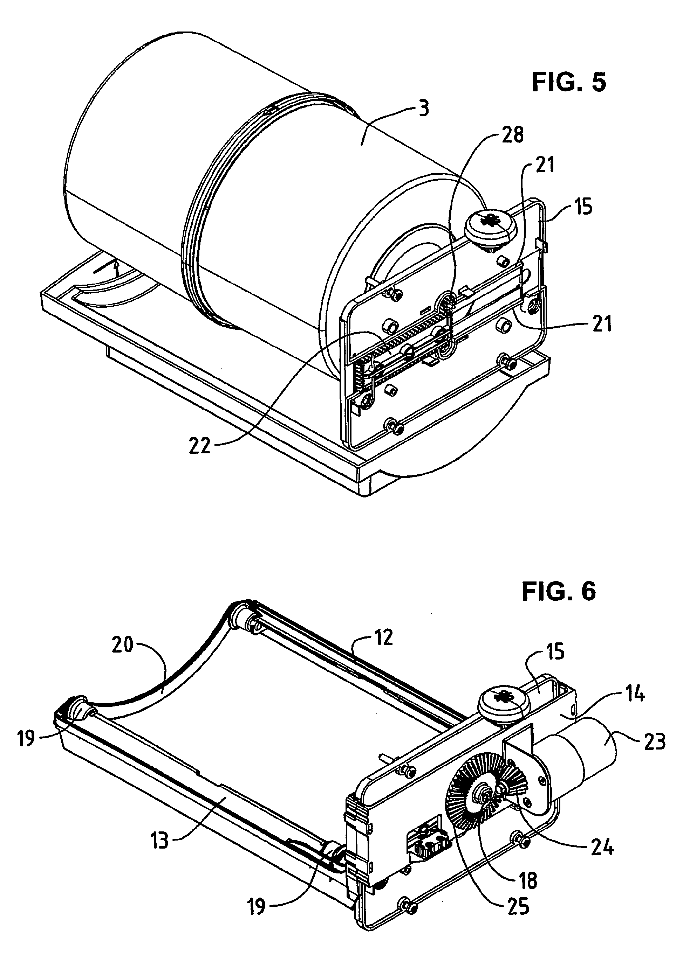

Fig. 5 zeigt eine Ansicht auf die Rückseite der Rückwand 15. Die Halteplatte 14 (Fig. 4) ist hier weggelassen, auf den Achszapfen 18 (Fig. 4) ist die Trommel 3 aufgesetzt. In der Rückwand 15 sind im mittleren Bereich zwei querverlaufende Führungsbahnen 21 angebracht. In diesen Führungsbahnen 21 ist eine Zahnplatte 22 entlang der Führungsbahnen 21 verschiebbar gehalten. Diese Zahnplatte 22 ist aussenseitig mit einer umlaufenden Verzahnung versehen, wie später noch im Detail gesehen wird. Im Eingriff mit der Verzahnung dieser Zahnplatte 22 ist das weitere Zahnrad 28, das auf den Achszapfen aufgesetzt ist und mit diesem drehstarr verbunden ist.

Fig. 6 zeigt die Rückwand 15 mit aufgesetzter Halteplatte 14, die die Rückwand 15 umgreift. An der Halteplatte 14 befestigt sind die beiden Tragarme 12 und 13, die mit den Rollen 19 ausgestattet sind, auf welchen die Trommel drehbar abstützbar ist. Die beiden Tragarme 12 und 13 sind mit dem Steg 20 am der Halteplatte 14 abgewandten Endbereich miteinander verbunden. An der Halteplatte 14 befestigt ist ein Elektromotor 23. Über ein Ritzel 24 treibt der Elektromotor 23 ein Zahnrad 25 an, das auf den Achszapfen 18 aufgesetzt ist und mit diesem drehstarr verbunden ist.

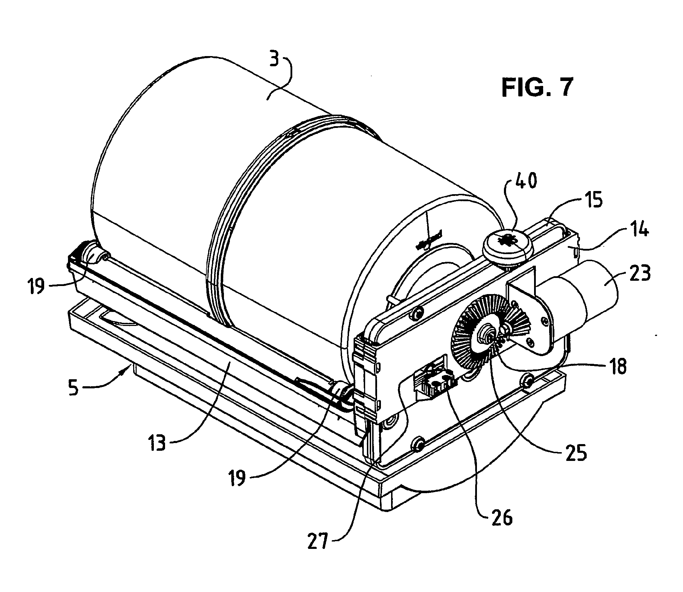

Fig. 7 zeigt die auf die Tragarme 12 und 13 aufgesetzte Trommel 3, welche auf den Rollen 19, die an den Tragarmen 12 und 13 angebracht sind, drehbar abgestützt ist. Ebenfalls ersichtlich ist die Halteplatte 14, welche die Rückwand 15 umgreift. Unter den Tragarmen 12 und 13 und der Trommel 3 ist das Wasserbad 5 sichtbar. Über den Elektromotor 23 ist das Zahnrad 25 antreibbar und mit diesem der Achszapfen 18, auf welchem auch die Trommel 3 aufgesetzt ist. An der Halteplatte 14 ist ein Endschalter 26 befestigt, dessen Fühler durch eine Ausnehmung 27 in der Halteplatte 14 hindurchragt, so dass er mit der Zahnplatte 22, welche in der Rückwand 15 quer verschiebbar ist, zusammenwirkt, wie im Detail später noch gesehen wird.

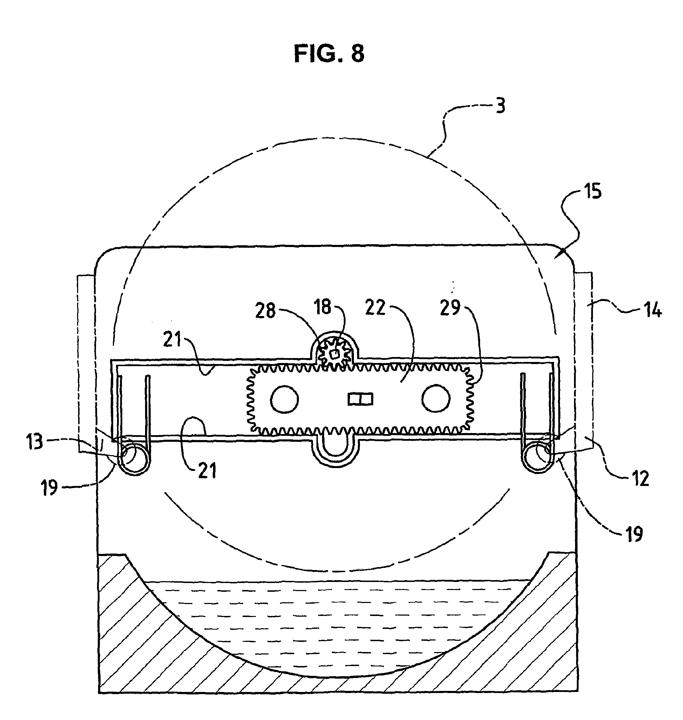

Mit Bezugnahme auf die Fig. 8 bis 11 wird nachfolgend nun die Funktion der erfindungsgemässen Einrichtung beschrieben. In den Fig. 8 bis 11 ist die Trommel 3 dargestellt, die auf den Achszapfen 18 aufgesteckt ist. Dieser Achszapfen 18 ist in der Halteplatte 14 drehbar gehalten. Die Trommel stützt sich auf den Rollen 19 der Tragarme 12 und 13 ab. Ebenfalls dargestellt ist die Rückwand 15, die mit den Führungsbahnen 21 ausgestattet ist, in welchen die Zahnplatte 22 querverschiebbar gehalten ist. Ebenfalls dargestellt ist das Wasserbad 5, welches mit Wasser gefüllt ist.

In Fig. 8 ist eine mögliche Ausgangsposition dargestellt. Die Zahnplatte 22 befindet sich in einer mittleren Position in den Führungsbahnen 21 der Rückwand 15. Das Zahnrad 28, das auf dem Achszapfen 18 aufgesetzt und mit diesem drehstarr verbunden ist, liegt auf der Zahnplatte 22 auf, und greift in die umlaufende Verzahnung 29 dieser Zahnplatte 22 ein. Beim Starten des Benetzungszyklusses wird beispielsweise der Startknopf 40 (Fig. 7) gedrückt, der Elektromotor beginnt zu laufen, der Achszapfen 18 mit dem darauf befestigten Zahnrad 28 und der Trommel 3 beginnt im Uhrzeigersinn zu drehen. Das Drehen des Achszapfens 18 mit dem Zahnrad 28 bewirkt, dass die Zahnplatte 22 in Fig. 8 nach links in den Führungsbahnen 21 verschoben wird.

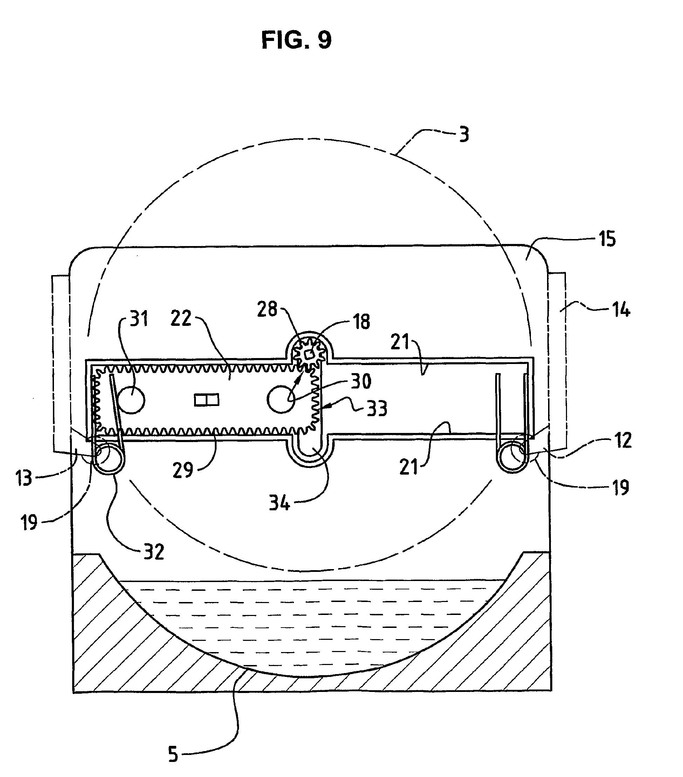

Wie aus Fig. 9 ersichtlich ist, erreicht das Zahnrad 28 den Eckbereich 30 der Zahnplatte 22, die in Fig. 9 nach links verschoben ist und mit einem Nocken 31 an der an der Rückwand 15 angebrachten Feder 32 anstösst. Das Zahnrad 28 wird weiter gedreht und gelangt in den vertikalen Bereich 33 der Zahnplatte 22. Das Zahnrad 28 durchfährt nun diesen vertikalen Bereich 33, durch die Feder 32 wird die Zahnplatte 22 gegen das Zahnrad 28 gedrückt, so dass dieses immer in Eingriff mit der Verzahnung 29 ist. Beim Durchlauf dieses vertikalen Bereichs 33 senkt sich das Zahnrad 28 ab, nimmt hierbei die Halteplatte 14 mit den Tragarmen 12 und 13, welche die Trommel 3 tragen, und den Elektromotor 23 (Fig. 7) mit dem Antrieb mit. Damit diese Absenkbewegung ausgeführt werden kann, ist in der Rückwand 15 eine schlitzförmige Ausnehmung 34 angebracht, was diese Absenkung ermöglicht.

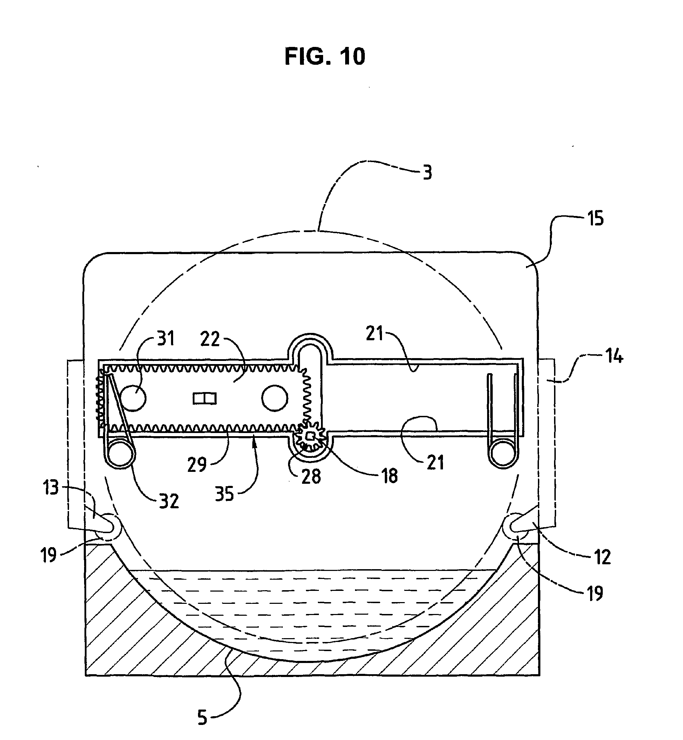

Es wird nun die abgesenkte Position erreicht, wie dies in Fig. 10 dargestellt ist. Die Trommel, die sich dauernd dreht, ist in das Wasserbad 5 abgesenkt, die Samen werden benetzt. Das Zahnrad 28 wird weitergedreht, und gelangt so in den unteren Bereich 35 der Zahnplatte 22. Die Zahnplatte 22 wird nun gegen die rechte Seite hin entlang den Führungsbahnen 21 verschoben. Während dieses Verschiebevorgangs bleibt die Trommel 3 im abgesenkten Zustand und taucht in das Wasserbad 5 ein. Die Trommel 3 wird weiterhin ebenfalls rotierend angetrieben, die in der Trommel 3 sich befindenden Samen und Keimlinge werden dadurch umgewälzt und vollständig benetzt.

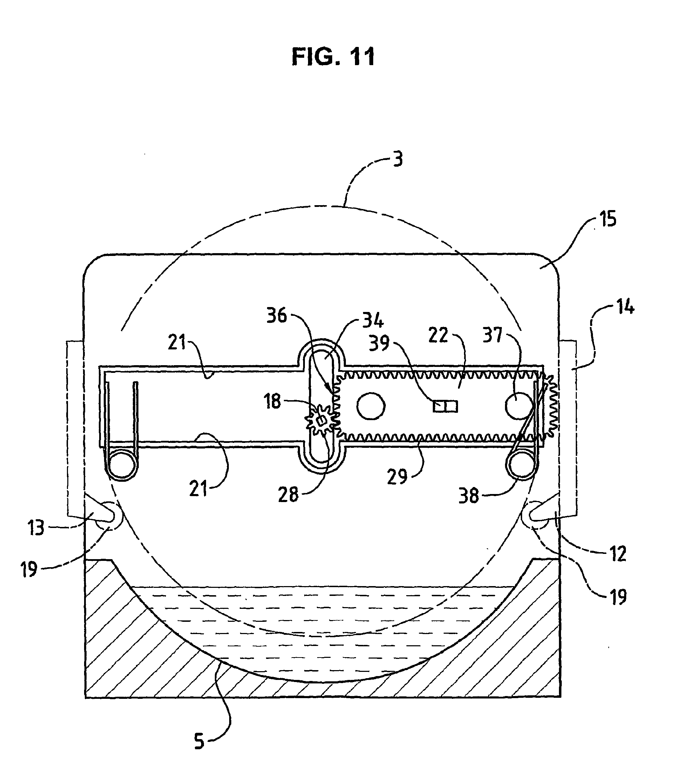

Das Zahnrad 28 gelangt nun in den rechten vertikalen Bereich 36 der Zahnplatte 22, wie dies aus Fig. 11 ersichtlich ist. Die Zahnplatte 22 ist vollständig auf die rechte Seite verschoben worden und stützt sich mit dem weiteren Nocken 37 auf der Feder 38 ab, wodurch bewirkt wird, dass die Verzahnung 29 der Zahnplatte 22 immer in Eingriff ist mit dem Zahnrad 28. Beim Erreichen dieses vertikalen Bereichs 36 klettert nun das Zahnrad 28 und mit ihm die Halteplatte 14 mit den Tragarmen 12 und 13 und der darauf aufgestützten Trommel 3, die weiterhin rotiert, wiederum gegen die angehobene Position, die Trommel 3 wird somit aus dem Wasserbad 5 herausgehoben. Hierbei verschiebt sich der Achszapfen 18 mit allen daran hängenden Elementen entlang der schlitzförmigen Ausnehmung 34 nach oben.

Das Zahnrad 18 gelangt dann wieder auf den oberen Bereich der Zahnplatte 22 und fährt in die Ausgangsposition zurück, wie dies in Fig. 8 dargestellt ist. In dieser Position kommt der Vorsprung 39, der an der Zahnplatte 22 befestigt ist, in den Bereich des Endschalters 26 (Fig. 7), dieser erzeugt ein Signal und bewirkt, dass der Benetzungszyklus abgeschlossen wird, was bedeutet, dass der Elektromotor ausgeschaltet wird, die Trommel 3 befindet sich im angehobenen Zustand, das in der Trommel 3 befindliche überschüssige Wasser, welches die Samen und Keimlinge benetzt, kann weiter abtropfen.

Der nächste Benetzungsvorgang der Samen und Keimlinge kann automatisch gestartet werden, wobei hierzu in bekannter Weise ein Zeitglied in die nicht dargestellte, bekannte Steuerung eingesetzt wird. Dieses Zeitglied kann beispielsweise über den Schalter 40 (Fig. 7) durch Drehen verstellt werden. Somit wird der nächste Benetzungsvorgang nach einer vorgegebenen Zeit automatisch ausgelöst, er läuft dann, wie vorgängig beschrieben, wieder ab.

Durch das Rotieren der Trommel, einerseits wenn diese im Wasserbad eingetaucht ist, andererseits auch vor dem Eintauchen und nach dem Auftauchen, werden die Keimlinge und Samen in optimaler Weise umgeschichtet und gelockert. Dadurch wird eine homogene Benetzung und Entwässerung der Samen und Keimlinge sichergestellt, eine Gärung und Schimmelpilzbildung wird vermieden.

Mit dieser Einrichtung wird ein optimaler Vorgang zum Benetzen, Umschichten und Lockern der Samen und der daraus spriessenden Keimlinge erreicht.

## Patentansprüche

1. Einrichtung zur Erzeugung von Keimlingen aus Samen, umfassend eine in einem Gehäuse (2) gelagerte, im wesentlichen horizontal angeordnete, um die Trommelachse (4) rotierbare Trommel (3) mit perforierter Wandung, in welche die Samen einfüllbar sind, welche Samen mit Wasser benetzbar sind und welche Trommel (3) in einstellbaren Zeitintervallen während einer bestimmten Zeit rotiert, **dadurch gekennzeichnet, dass** die Trommel (3) an einem Träger (11) angebracht ist, welcher Träger (11) entlang am Gehäuse (2) angebrachten Führungsmitteln durch Antriebsmittel absenkbar und anhebbar ist, und dass ein Wasserbad (5) derart im Gehäuse (2) angeordnet ist, dass die Trommel (3) in der unteren Lage teilweise in das Wasserbad (5) eintaucht und im angehobenen Zustand vollständig aus dem Wasserbad (5) herausgehoben ist.

2. Einrichtung nach Anspruch 1, **dadurch gekennzeichnet, dass** der Träger (11) aus zwei parallel verlaufenden Tragarmen (12, 13) gebildet ist, zwischen welchen die Trommel (3) auf Rollen (19) rotierbar abgestützt ist, welche Tragarme (12, 13) an einer Halteplatte (14) befestigt sind, die im wesentlichen senkrecht zu den Tragarmen (12,13) ausgerichtet ist.

3. Einrichtung nach Anspruch 2, **dadurch gekennzeichnet, dass** am Gehäuse (2) eine Rückwand (15) angebracht ist, welche im wesentlichen senkrecht zur Trommelachse (4) ausgerichtet ist und entlang welcher die Halteplatte (14) mit den Tragarmen (12,13) zum Anheben und Absenken der Trommel (3), geführt durch die Führungsmittel, verschiebbar ist.

4. Einrichtung nach einem der Ansprüche 1 bis 3, **dadurch gekennzeichnet, dass** zum Anheben und Absenken der Trommel (3) und zum rotierenden Antreiben der Trommel (3) ein Antrieb mit entsprechenden Getrieben angebracht ist.

5. Einrichtung nach Anspruch 4, **dadurch gekennzeichnet, dass** der Antrieb einen Elektromotor (23) umfasst, der an der Halteplatte (14) befestigt ist und einen Achszapfen (18) rotierend antreibt, welcher Achszapfen (18) in der Halteplatte (14) gelagert ist und weicher mit der Trommel (3) verbindbar ist.

6. Einrichtung nach Anspruch 5, **dadurch gekennzeichnet, dass** am Achszapfen (18) drehfest ein weiteres Zahnrad (28) befestigt ist, welches mit einer Zahnplatte (22), die aussenseitig mit einer umlaufenden Verzahnung (29) versehen ist, kämmt, welche in der Rückwand (15) im wesentlichen horizontal verschiebbar gehalten ist.

7. Einrichtung nach Anspruch 6, **dadurch gekennzeichnet, dass** die seitliche Verschiebung der Zahnplatte (22) beidseits mit Abstützelementen (31, 32; 37, 38) begrenzt ist.

8. Einrichtung nach einem der Ansprüche 5 bis 7, **dadurch gekennzeichnet, dass** in der Rückwand (15) eine längsschlitzförmige Ausnehmung (34) angebracht ist, durch welche der Achszapfen (18) hindurchragt.

9. Einrichtung nach einem der Ansprüche 6 bis 8, **dadurch gekennzeichnet, dass** ein Benetzungszyklus einem vollständigen Umlauf des weiteren Zahnrads (18) um die Zahnplatte (22) entspricht und durch einen Endschalter (26) begrenzt ist, welcher durch einen an der Zahnplatte (22) angebrachten Vorsprung (39) betätigbar ist.

10. Einrichtung nach einem der Ansprüche 1 bis 9, **dadurch gekennzeichnet, dass** der Benetzungsvorgang durch eine Steuereinrichtung steuerbar ist, welche mit einem Zeitglied ausgestattet ist, mittels welchem das Zeitintervall von einem Benetzungsvorgang bis zum nächsten einstellbar ist.

## Claims

1. Device for production of seedlings from seeds, comprising a drum (3), with perforated walling, disposed substantially horizontal, rotatable about the drum axis (4), and supported in a housing (2), in which drum the seeds are able to be filled, which seeds are able to be wet with water, and which drum (3) rotates for a predetermined time at time intervals able to be set, **characterised in that** the drum (3) is mounted on a support (11), which support (11) is lowerable and liftable, by drive means, along guide means mounted on the housing (2), and **in that** a water bath (5) is disposed in the housing (2) such that the drum (3) is partially submerged in the water bath (5) in the lower position and is lifted out of the water bath (5) completely in the lifted position.

2. Device according to claim 1, **characterised in that** the support (11) is formed by two support arms (12, 13) running parallel, between which the drum (3) is rotatably supported on rollers (19), which support arms (12, 13) are fixed to a holding plate (14) that is aligned substantially perpendicular to the support arms (12, 13).

3. Device according to claim 2, **characterised in that** mounted on the housing (2) is a rear wall (15), which is aligned substantially perpendicular to the drum axis (4) and along which the holding plate (14) is displaceable with the support arms (12, 13) for lifting and lowering of the drum (3), guided by the guide means.

4. Device according to one of the claims 1 to 3, **characterised in that** a drive with corresponding gears is provided for lifting and lowering of the drum (3) and for rotating drive of the drum (3).

5. Device according to claim 4, **characterised in that** the drive comprises an electromotor (23) which is fixed to the holding plate (14) and drives in rotation a journal (18), which journal (18) is borne in the holding plate (14) and is connectible to the drum (3).

6. Device according to claim 5, **characterised in that** fixed in a torque-proof way to the journal (18) is a further toothed wheel (28), which engages with a toothed rack (22), which is provided with a surrounding toothing (29) on the outside, which toothed rack is held displaceable substantially horizontally in the rear wall (15).

7. Device according to claim 6, **characterised in that** the lateral displacement of the toothed rack (22) is limited on both sides by support elements (31, 32; 37, 38).

8. Device according to one of the claims 5 to 7, **characterised in that** an opening (34) in the shape of a longitudinal slot is made in the rear wall (15), through which opening the journal (18) protrudes.

9. Device according to one of the claims 6 to 8, **characterised in that** a wetting cycle corresponds to a complete revolution of the further toothed wheel (18) about the toothed rack (22), and is limited by an end switch (26) which is able to be actuated by a projection (39) mounted on the toothed rack (22).

10. Device according to one of the claims 1 to 9, **characterised in that** the wetting operation is controllable by a control device which is provided with a timing element by means of which the time interval from one wetting operation to the next is able to be set.

## Revendications

1. Dispositif pour produire des germes à partir de graines, comprenant un tambour (3) avec une paroi perforée, soutenu dans un boîtier (2) de manière rotative autour de l'axe de tambour (4), et disposée de manière substantiellement horizontale, dans lequel les graines peuvent être remplies, lesquelles graines peuvent être mouillées avec de l'eau et lequel tambour (3) tourne pour une durée prédéterminée à des intervalles de temps réglables, **caractérisé en ce que** le tambour (3) est monté sur un support (11), lequel support (11) peut être abaissé et soulevé par des moyens d'entraînement le long des moyens de guidage montés sur le boîtier (2), et **en ce qu'**un bain d'eau (5) est disposé dans le boîtier (2) de manière que le tambour (3) soit partiellement submergé dans le bain d'eau (5) dans la position basse et sorti complètement du bain d'eau (5) dans la position soulevée.

2. Dispositif selon la revendication 1, **caractérisé en ce que** le support (11) est formé par deux bras de support (12, 13) parallèles, entre lesquels le tambour (3) est supporté de manière rotative sur des rouleaux (19), lesquels bras de support (12, 13) sont fixés à une plaque de retenue (14) qui est alignée de manière substantiellement perpendiculaire aux bras de support (12, 13).

3. Dispositif selon la revendication 2, **caractérisé en ce qu'**une paroi arrière (15) est montée au boîtier (2), laquelle est alignée de manière substantiellement perpendiculaire à l'axe de tambour (4) et le long de laquelle la plaque de retenue (14) avec les bras de support (12, 13), guidé par les moyens de guidage, est déplaçable pour soulever et abaisser le tambour (3).

4. Dispositif selon l'une des revendications 1 à 3, **caractérisé en ce qu'**un élément d'entraînement avec les engrenages correspondants est prévu pour soulever et abaisser le tambour (3) et pour entraîner le tambour (3) en rotation.

5. Dispositif selon la revendication 4, **caractérisé en ce que** l'élément d'entraînement comprend un moteur électrique (23) qui est fixé à la plaque de retenue (14) et entraîne en rotation un pivot axial (18), lequel pivot axial (18) est supporté dans la plaque de retenue (14) et lequel peut être connecté au tambour (3).

6. Dispositif selon la revendication 5, **caractérisé en ce qu'**une roue dentée supplémentaire (28) est fixée de manière solidaire en rotation au pivot axial (18), laquelle engraine avec une plaque dentée (22) qui est munie d'une denture périphérique (29) sur l'extérieur, laquelle plaque dentée est tenue déplaçable de manière substantiellement horizontale dans la paroi arrière (15).

7. Dispositif selon la revendication 6, **caractérisé en ce que** le déplacement latéral de la plaque dentée (22) est limité sur les deux côtés par des éléments de support (31, 32 ; 37, 38).

8. Dispositif selon l'une quelconque des revendications 5 à 7, **caractérisé en ce qu'**une ouverture (34) dans la forme d'une fente longitudinale est prévue dans la paroi arrière (15), à travers laquelle ouverture le pivot axial (18) fait saillie.

9. Dispositif selon l'une quelconque des revendications 6 à 8, **caractérisé en ce qu'**un cycle de mouillage correspond à une révolution complète de la roue dentée supplémentaire (18) autour de la plaque dentée (22) et est limité par un interrupteur de fin de course (26) qui peut être actionné par une saillie (39) montée sur la plaque dentée (22).

10. Dispositif selon l'une quelconque des revendications 1 à 9, **caractérisé en ce que** l'opération de mouillage est contrôlable par un dispositif de contrôle qui est muni d'un élément de réglage au moyen duquel l'intervalle de temps entre une opération de mouillage et la suivante peut être réglée.
